(19) Europäisches Patentamt
European Patent Office
Office européen des brevets

(11) **EP 2 642 424 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
***G06K 7/10*** *(2006.01)*

(21) Anmeldenummer: **13158295.9**

(22) Anmeldetag: **08.03.2013**

(54) **Identifikationssystem**

Identification system

Système d'identification

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2012 DE 102012102417**

(43) Veröffentlichungstag der Anmeldung:
**25.09.2013 Patentblatt 2013/39**

(73) Patentinhaber: **BALLUFF GmbH**
**73765 Neuhausen (DE)**

(72) Erfinder:
• **Hauser, Fabian**
**73207 Plochingen (DE)**
• **Höhn, Claus**
**72657 Altenriet (DE)**
• **Matzke, Gerhard**
**73760 Ostfildern (DE)**

(74) Vertreter: **Hoeger, Stellrecht & Partner Patentanwälte**
**Uhlandstrasse 14c**
**70182 Stuttgart (DE)**

(56) Entgegenhaltungen:
EP-A1- 2 006 793    DE-A1-102007 061 707
US-A1- 2006 086 809    US-A1- 2009 121 839

EP 2 642 424 B1

**Beschreibung**

Die Erfindung betrifft ein Identifikationssystem, umfassend mindestens einen Datenträger, an welchem Daten gespeichert oder speicherbar sind, und mindestens eine Schreib-/Leseeinrichtung, durch welche Daten an dem Datenträger berührungslos schreibbar sind und/oder Daten aus dem Datenträger berührungslos auslesbar sind.

Identifikationssysteme der eingangs genannten Art werden beispielsweise dazu genutzt, die Anwesenheit bzw. Abwesenheit eines Gegenstands, an welchem ein Datenträger sitzt, zu überwachen. Es kann beispielsweise auch die Positionsänderung eines Objekts, an welchem ein Datenträger sitzt, verfolgt werden.

In dieser Anmeldung wird unter Schreib-/Leseeinrichtung eine Einrichtung verstanden, welche entweder nur zum Beschreiben von Datenträgern geeignet ist oder nur zum Lesen von Daten aus Datenträgern geeignet ist, oder sowohl Schreibvorgänge als auch Lesevorgänge an Datenträgern durchführen kann.

Aus der WO 2007/035644 A2 ist eine Identifikationsstation bekannt, welche einen ersten Wellenleiter und einen zweiten Wellenleiter umfasst.

Aus der US 2005/0128024 A1 ist ein Wellenleiter bekannt, welcher einen ersten longitudinalen Leiter umfasst und einen zweiten longitudinalen Leiter umfasst, welcher parallel zu dem ersten Leiter ist. Der zweite Leiter umgibt einen Innenraum, so dass ein elektromagnetisches Feld auf den Innenraum beschränkt ist. Der erste Leiter ist außerhalb dieses Innenraums des zweiten Leiters positioniert. Der zweite Leiter hat mindestens einen Schlitz, welcher mit einem leeren Teil des Innenraums korrespondiert und die Einführung eines Kopplers ermöglicht.

Die US 2010/0148936 A1 offenbart eine Lesevorrichtung mit einer Leseantenne.

Aus der US 2009/0091449 A1 ist eine Leseantenne für ein Radiofrequenzidentifizierungslabel bekannt, welche einen ersten Bereich innerhalb einer Gewichtsplatte geeignet zur Benutzung an einer Waage und einen zweiten Bereich zum Anregen des ersten Bereichs umfasst.

Aus der DE 196 37 964 A1 ist eine Einrichtung zum induktiven hochfrequenten Datenaustausch zwischen einer Resonanzkreisspule eine Terminals und einer Koppelspule eines kontaktlosen Transponders durch Amplitudenmodulation infolge Bedämpfung des Koppelfelds bekannt.

Aus der DE 692 30 697 T2 ist ein Target zur Verwendung in einem automatischen Identifizierungssystem mit einer Vielzahl von unabhängigen Festkörper-Resonatoren bekannt, wobei die Resonatoren in dem Target bei einer Vielzahl von Funkfrequenzen in Resonanz kommen.

Aus der DE 60 2004 009 462 T2 ist ein Transponder bekannt, der eine Antenne, eine Gleichrichterschaltung, eine durch diese Gleichrichterschaltung gespeiste Logikschaltung und einen Modulationstransistor, der zwischen die Gleichrichterschaltung und die Logikschaltung geschaltet ist, umfasst, wobei der Modulationstransistor durch die Logikschaltung gesteuert wird, um Antwortsignale des Transponders zu erzeugen.

Aus der EP 2 047 565 B1 ist eine Schlitzantenne mit einer Antennenkonturplatte mit einer Mehrzahl von Antennenschlitzen und mit mindestens einer Ansteuerschaltung zum Anregen der Antennenkonturplatte zum Aussenden und/oder zum Empfangen von elektromagnetischer Strahlung bekannt, wobei in mindestens einen Antennenschlitz der Antennenkonturplatte eine Leiterplatte mit einer Ansteuerschaltung eingesteckt ist.

Aus der EP 11 174 050 ist ein Identifikationssystem, umfassend mindestens einen Datenträger, an welchem Daten gespeichert oder speicherbar sind und welcher keine eigene Energiequelle aufweist, und mindestens eine Schreib-/Leseeinrichtung, durch welche Daten an dem Datenträger berührungslos schreibbar sind und/oder Daten aus dem Datenträger berührungslos auslesbar sind, bekannt, wobei an der mindestens einen Schreib-/Leseeinrichtung mindestens ein Aperturstrahler mit mindestens einer Apertur angeschlossen ist.

Aus der US 2009/0121839 A1 ist ein drahtloses Identifikationssystem bekannt. Anspruch 1 ist gegenüber diesem Dokument abgegrenzt.

Aus der DE 10 2007 061 707 A1 ist ein Flurförderfahrzeug mit einer RFID-Sende-/Empfangseinheit zur Erfassung und Auslesung von Speicherinhalten mobiler Datenspeicher von Lasten bekannt.

Aus der EP 2 006 793 A1 ist eine Wellenleitervorrichtung bekannt.

Aus der US 2006/0086809 A1 ist ein System zur Identifikation von Objekten bekannt, welches einen RFID-Tack umfasst.

Der Erfindung liegt die Aufgabe zugrunde, ein Identifikationssystem der eingangs genannten Art bereitzustellen, welches eine definierte Abstrahlungscharakteristik bei hoher Abstrahlungsstärke aufweist.

Diese Aufgabe wird bei dem eingangs genannten Identifikationssystem erfindungsgemäß dadurch gelöst, dass an der mindestens einen Schreib-/Leseeinrichtung mindestens ein Hohlwellenleiter angeordnet ist, welcher an einer Längsseite Schlitze aufweist, und dass ein Abstand eines äußeren Schlitzes zu dem nächstliegenden Stirnende mindestens näherungsweise 25 % einer Hohlwellenleiter-Wellenlänge beträgt.

Der Hohlwellenleiter stellt die eigentliche Quelle für die elektromagnetische Strahlung bereit. Es hat sich gezeigt, dass ein Hohlwellenleiter und insbesondere rechteckiger Hohlwellenleiter mit einer Schlitzstruktur eine hohe Abstrahlung bei definierter Abstrahlungscharakteristik bereitstellt.

Insbesondere werden in dem Hohlwellenleiter $H_{10}$-Wellen erzeugt, die im Außenraum Leckwellen erzeugen.

Der entsprechende Hohlwellenleiter ist dann ein Leckwellenleiter.

Die Schlitzstruktur mit dem mindestens einen Schlitz ist dabei so angeordnet und ausgebildet, dass sie an eine entsprechende Anwendung des Identifikationssystems angepasst ist.

Es lassen sich auch lange Verfahrwege gleichmäßig und kostengünstig mit Strahlung beaufschlagen. Es lässt sich dadurch ein großer Versatz über eine große Länge erreichen. Eine Anwendung ist beispielsweise die Überwachung, ob eine Öffnung oder Tor durchfahren wird, auch wenn die exakte Position des Datenträgers nicht bekannt ist. An einer Umrandung der Öffnung bzw. des Tors wird ein rechteckiger Hohlwellenleiter positioniert. Der Datenträger ist an einem Objekt fixiert, welches durch die Öffnung bzw. das Tor durchfahren kann. Durch das entsprechende Identifikationssystem lässt sich dann dies auf einfache Weise feststellen. (Wenn beispielsweise das Objekt, welches die Öffnung bzw. das Tor durchfahren kann, äußere Abmessungen aufweist, die nahe an den Innenabmessungen der Öffnung bzw. des Tors liegen, kann ein Datenträger nur mit geringem Abstand zu der Umrandung liegen, wenn die Öffnung bzw. das Tor durchfahren wird.)

Das erfindungsgemäße Identifikationssystem lässt sich auch einsetzen, wenn der Hohlwellenleiter in metallischem Material eingebaut ist, sofern die Schlitzstruktur nicht durch metallisches Material abgedeckt wird.

Über die Schlitzstruktur des Hohlwellenleiters ist eine Art linienförmige Antenne gebildet, sodass über einen linienhaften Bereich mit entsprechend großer Länge ein Schreibvorgang bzw. Lesevorgang durchführbar ist. Dadurch lässt sich auch ein großer Überwachungsbereich erhalten. Es hat sich beispielsweise gezeigt, dass es möglich ist, über einen gesamten geschlitzten Bereich in einem Abstand von 1 m oder mehr Datenträger zu lesen (oder zu beschreiben).

Der Hohlwellenleiter, welcher insbesondere aus einem metallischen Material gefertigt ist, kann aufgrund seiner entsprechenden mechanischen Steifigkeit auch als Strukturbauteil einer Anwendung eingesetzt werden. Beispielsweise kann er als Strebe, Pfeiler oder Führungsschiene (bzw. als Teil der genannten Strukturbauteile) verwendet werden.

Es ist auch möglich, dass der Hohlwellenleiter als nicht-abstrahlender Wellenleiter ausgebildet ist; im Inneren des Schlitzhohlleiters bildet sich insbesondere eine $H_{10}$-Welle aus und an dem (mindestens einen) Schlitz ist eine Wandung angeordnet, die verhindert, dass eine Abstrahlung ins Freie erfolgt. Ein solcher Hohlwellenleiter ist vorteilhaft, wenn, um beispielsweise eine Beeinflussung von elektronischen Komponenten der Anwendung zu verhindern, nicht in den Außenraum abgestrahlt werden soll.

Ein Abstand eines äußeren Schlitzes zu dem nächstliegenden Stirnende beträgt mindestens näherungsweise 25 % einer Hohlwellenleiter-Wellenlänge $\lambda_h$. Dadurch ergibt sich eine optimierte Abstrahlungscharakteristik. Dieser Bereich kann beispielsweise auch zwischen 15 % und 35 % je nach Anwendung liegen.

Günstig ist es, wenn der Hohlwellenleiter als starres Rohr ausgebildet ist oder ein starres Rohr umfasst. Dieses Rohr bildet (insbesondere mit Kurzschlussplatten) den entsprechenden Hohlwellenleiter. Das Rohr selber, welches aus einem elektrisch leitenden Material hergestellt ist und insbesondere metallischen Material hergestellt ist, lässt sich mit einer hohen mechanischen Stabilität ausbilden. Ein solches Rohr weist eine hohe Eigensteifigkeit auf, sodass eine einfache Montage möglich ist. Der Hohlwellenleiter lässt sich dann wiederum auch als Strukturbauteil an einer Anwendung einsetzen; beispielsweise lässt sich damit eine Führung ausbilden oder der Hohlwellenleiter kann als Pfeiler oder Strebe usw. eingesetzt werden.

Insbesondere sind, wenn eine Mehrzahl von Schlitzen vorgesehen sind, diese an der gleichen Längsseite des Hohlwellenleiters angeordnet. Dadurch ergibt sich eine optimierte Abstrahlungscharakteristik.

Der mindestens eine Schlitz ist dabei vorzugsweise parallel zu einer Längserstreckungsrichtung des mindestens einen Hohlwellenleiters angeordnet. Dadurch ergibt sich eine definierte Abstrahlungscharakteristik mit hoher Strahlungsstärke.

Ganz besonders vorteilhaft ist es, wenn der mindestens eine Hohlwellenleiter an seiner Stirnseite jeweils mit einer Kurzschlussplatte geschlossen ist. Dadurch können sich in dem Hohlwellenleiter stehende elektromagnetische Wellen ausbilden und es ergibt sich dann über die entsprechenden Leckwellen eine definierte Abstrahlungscharakteristik.

Günstigerweise ist an dem mindestens einen Hohlwellenleiter mindestens ein Anschluss für die mindestens eine Schreib-/Leseeinrichtung angeordnet. Dadurch lässt sich eine Steuerung erreichen und es lässt sich über sie ein Schreiben bzw. Lesen durchführen.

Ganz besonders vorteilhaft ist es, wenn der mindestens eine Anschluss der Längsseite gegenüberliegt, an welcher der mindestens eine Schlitz angeordnet ist. Dadurch ergibt sich eine optimierte Einkoppelbarkeit und Auskoppelbarkeit mit definierter Strahlungscharakteristik. Die Abstrahlungscharakteristik wird durch den Anschluss minimal beeinflusst.

Günstig ist es, wenn der mindestens eine Anschluss an eine Breitseite eines rechteckigen Hohlwellenleiters angeordnet ist. Dadurch ergibt sich eine optimierte Einkoppelbarkeit.

Insbesondere ist der mindestens eine Anschluss an oder in der Nähe eines Stirnendes des mindestens einen Hohlwellenleiters angeordnet und liegt insbesondere näher zu einem ersten Stirnende als einem dem ersten Stirnende gegenüberliegenden zweiten Stirnende und insbesondere ist der Abstand zu dem zweiten Stirnende mindestens dreifach größer als der Abstand zu dem ersten Stirnende. Vorzugsweise liegt der Anschluss (in einer Höhenprojektion auf die Längsseite mit der Schlitzstruktur) außerhalb der Schlitzstruktur. Dadurch wird durch den Anschluss die Abstrahlungscharakteristik minimal beeinflusst.

Günstig ist es, wenn der mindestens eine Anschluss in einem Abstand zu dem nächstliegenden Stirnende liegt, welcher mindestens näherungsweise 25 % einer Hohlwellenleiter-Wellenlänge $\lambda_h$ beträgt. Dadurch ergibt sich eine optimierte Einkopplung. Wenn der Abstand $\lambda_h/4$ beträgt, ist die Einkopplung optimiert. Auch bei Abweichungen davon, welche insbesondere zwischen 15 % und 35 % und insbesondere zwischen 20 % und 30 % von $\lambda_h/4$ liegen, können sich noch gute Ergebnisse realisieren lassen.

Insbesondere weist der mindestens eine Hohlwellenleiter einen Hohlraum auf und der mindestens eine Schlitz ist zwischen dem Hohlraum und dem Außenraum durchgehend. Dadurch lässt sich eine Leckwellenabstrahlung an dem Hohlwellenleiter realisieren.

Günstigerweise hat der mindestens eine Hohlwellenleiter einen Hohlraum, in welchem ein Dielektrikum angeordnet ist. Dadurch lässt sich eine berührungslose elektromagnetische Kopplung zu dem Datenträger zum Beschreiben bzw. zum Auslesen von Daten erreichen. Durch Verwendung eines entsprechenden Dielektrikums ist auch eine Dimensionierungsanpassung des Hohlwellenleiters möglich. Beispielsweise ist der Hohlwellenleiter mit Polyurethan ausgeschäumt. Polyurethan hat eine Dielektrizitätskonstante im Bereich zwischen 3 und 4.

Bei einer Ausführungsform hat der Hohlwellenleiter einen rechteckigen Querschnitt.

Insbesondere weist der mindestens eine Hohlwellenleiter eine erste Längsseite und eine zweite Längsseite auf, wobei die zweite Längsseite beabstandet zu der ersten Längsseite ist und parallel zu dieser orientiert ist, und weist eine dritte Längsseite und eine vierte Längsseite auf, wobei die vierte Längsseite beabstandet zu der dritten Längsseite ist, parallel zu dieser orientiert ist und die dritte Längsseite senkrecht zu der ersten Längsseite orientiert ist. Der Hohlwellenleiter ist dann im Querschnitt rechteckförmig. Es ergibt sich dadurch eine optimierte Abstrahlungscharakteristik. Insbesondere können sich in dem Hohlwellenleiter $H_{10}$-Wellen ausbilden.

Insbesondere weisen die erste Längsseite und die dritte Längsseite unterschiedliche Breiten auf und die erste Längsseite und die zweite Längsseite haben die gleiche Breite und die dritte Längsseite und die vierte Längsseite haben die gleiche Breite. Dadurch hat der Hohlwellenleiter einen rechteckigen Querschnitt.

Bei einer Ausführungsform ist der mindestens eine Datenträger außerhalb eines Hohlraums des mindestens einen Hohlwellenleiters positioniert und/oder geführt. Dadurch lässt sich beispielsweise ein Vorbeibewegen des mindestens einen Datenträgers an dem Hohlwellenleiter auf einfache Weise detektieren.

Es kann auch vorgesehen sein, dass der mindestens eine Datenträger innerhalb eines Hohlraums des mindestens einen Hohlwellenleiters positioniert ist und/oder geführt ist. Eine solche Ausbildung ist vorteilhaft, wenn insbesondere der Hohlwellenleiter nur minimal oder gar nicht in den Außenraum abstrahlen soll.

Bei einer entsprechenden Ausführungsform sitzt der mindestens eine Datenträger an einem Halter, welcher durch den mindestens einen Schlitz des Hohlwellenleiters durchgetaucht ist. Dadurch kann der Datenträger beispielsweise innerhalb des Hohlraums bewegt werden.

Bei einer Ausführungsform sitzt der mindestens eine Schlitz zwischen gegenüberliegenden Wänden, welche quer und insbesondere senkrecht über die Längsseite abstehen, an welcher der mindestens eine Schlitz angeordnet ist, wobei die Wände in den Außenraum weisen. Der Hohlwellenleiter hat dann eine Art von Kaminstruktur. Dies kann für manche Anwendungen vorteilhaft sein. Ein entsprechender Hohlwellenleiter weist insbesondere eine minimale Abstrahlung auf bzw. strahlt bei entsprechender Dimensionierung überhaupt nicht nach außen ab. Die entsprechende Ausführungsform ist dann vorteilhaft, wenn die Strahlungsbelastung der Umgebung minimiert werden soll, wie beispielsweise bei sicherheitskritischen Anwendungen oder bei Anwendungen wie beispielsweise innerhalb eines Flugzeugs, bei welchen elektronische Systeme nicht beeinflusst werden dürfen. Die Wände bewirken, dass das Wellenfeld nach außen hin exponentiell abklingt. Wenn eine Wandhöhe größer ist als eine Schlitzbreite, dann ist bei einem symmetrischen Aufbau praktisch kein Außenfeld nachweisbar.

Insbesondere sind dann die gegenüberliegenden Wände parallel ausgerichtet. Ein Abstand der gegenüberliegenden Wände entspricht bevorzugter Weise der

Breite des mindestens einen Schlitzes. Es ist aber auch möglich, dass der Abstand der gegenüberliegenden Wände größer ist als die Breite des Schlitzes.

Die Schlitzstruktur des Hohlwellenleiters weist insbesondere mindestens einen Schlitz auf, welcher über seine Längserstreckungsrichtung eine konstante Breite hat. Dadurch ergibt sich eine definierte Abstrahlungscharakteristik mit hoher Strahlungsstärke.

Aus dem gleichen Grund ist es günstig, wenn der mindestens eine Schlitz eine größere Länge in seiner Längserstreckungsrichtung hat als eine Breite quer zu der Längserstreckungsrichtung. Die Längserstreckungsrichtung des Schlitzes ist dabei insbesondere mindestens näherungsweise parallel zu einer Längserstreckungsrichtung des Hohlwellenleiters.

Es ist dann vorteilhaft, wenn der Schlitz und die Wände so dimensioniert sind, dass der Hohlwellenleiter nicht nach außen abstrahlt. Insbesondere ist dann eine Schlitzbreite kleiner als 0,4-mal einer Breite eines entsprechenden rechteckigen Hohlwellenleiters in der gleichen Breitenrichtung. Es ist ferner vorteilhaft, wenn eine entsprechende Höhe der Wände, welche über den Schlitz hinausragen, größer ist als eine Schlitzbreite.

Ganz besonders vorteilhaft ist es, wenn ein Abstand von benachbarten Schlitzen mindestens näherungsweise 50 % einer Hohlwellenleiter-Wellenlänge $\lambda_h$ beträgt. Dadurch ergibt sich eine optimierte Abstrahlungscharakteristik. Je stärker die Abweichung dieses Abstands von der halben Hohlwellenleiterlänge ist, desto größer ist die Abweichung von der idealen Abstrahlungscharakteristik. Je nach Anwendungen sind beispielsweise auch Abstände im Bereich zwischen 30 % und 70 % oder zwischen 40 % und 60 % von der Hohlwellenleiter-Wellenlänge $\lambda_h$ akzeptabel.

Aus dem gleichen Grund ist es günstig, wenn eine Länge eines Schlitzes mindestens näherungsweise 50 % einer Freiraumwellenlänge $\lambda_a$ beträgt. Die Freiraumwellenlänge $\lambda_a$ ist die Wellenlänge von abgestrahlten Wellen außerhalb des Hohlwellenleiters. Es ergibt sich dann eine optimierte Abstrahlungscharakteristik. Je nach Anwendungen kann die Länge eines Schlitzes auch zwischen 30 % und 70 % oder beispielsweise zwischen 40% und 60 % der Freiraumwellenlänge betragen.

Günstig ist es, wenn eine Mehrzahl von Schlitzen vorliegen, wobei benachbarte Schlitze quer zueinander versetzt sind. Dadurch ergibt sich eine optimierte Abstrahlungscharakteristik.

Es ist insbesondere dann vorteilhaft, wenn mindestens eine erste Reihe von Schlitzen und eine zweite Reihe von Schlitzen vorliegt, wobei insbesondere die erste Reihe und die zweite Reihe parallel beabstandet zueinander sind. Dadurch lässt sich über eine große Länge ein gleichmäßiges "Abstrahlungsband" erreichen.

Es ist dann besonders vorteilhaft, wenn die erste Reihe und die zweite Reihe jeweils beabstandet zu einer Mittellinie sind und insbesondere den gleichen Abstand zu dieser Mittellinie aufweisen. Dadurch ergibt sich eine optimierte Abstrahlungscharakteristik.

Es ist ferner vorteilhaft, wenn die Schlitze in der ersten Reihe und der zweiten Reihe alternierend angeordnet sind. Beispielsweise ist die Reihenfolge von Schlitzen dann bezogen auf eine Längsrichtung des Hohlwellenleiters: Schlitz in der ersten Reihe, Schlitz in der zweiten Reihe, Schlitz in der ersten Reihe usw. Es liegt dann eine Lücke zwischen benachbarten Schlitzen in der gleichen Reihe vor, welche eine Länge größer als eine Schlitzlänge hat. In dieser Lücke ist dann in der entsprechenden anderen Reihe ein Schlitz angeordnet.

Günstig ist es, wenn der mindestens eine Datenträger keine eigene Energiequelle hat und die Energie für den Datenaustausch mit der mindestens einen Schreib-/Leseeinrichtung durch die mindestens eine Schreib-/Leseeinrichtung bereitgestellt ist. Die Energie für einen Datenaustausch mit der Schreib-/Leseeinrichtung ist dann durch diese bereitgestellt. Durch Ankopplung des Datenträgers an das elektromagnetische Feld kann dieser dem elektromagnetischen Feld entsprechend Energie entnehmen, um einen Auslesevorgang bzw. einen Schreibvorgang zu ermöglichen. Der mindestens eine Datenträger lässt sich dadurch mit minimierten Abmessungen ausbilden und es müssen keine Anschlüsse vorgesehen werden.

Insbesondere liegt eine Frequenz für den Datenaustausch im GHz-Bereich und/oder im UHF-Bereich, das heißt im Bereich zwischen 0,3 GHz und 3 GHz, das heißt im Dezimeter-Wellenbereich. Bei einem bevorzugten Ausführungsbeispiel liegt der Bereich zwischen 865 MHz und 950 MHz (UHF-Bereich).

Ganz besonders vorteilhaft ist es, wenn der mindestens eine Datenträger im Nahbereich des mindestens einen Hohlwellenleiters positioniert ist und/oder in diesen und/oder in diesem beweglich ist. Man erhält im Nahbereich eine gleichmäßige Abstrahlung und es kommt nicht oder nur im geringen Umfang zu Störungen durch Reflektion und Interferenzen.

Insbesondere ist eine Bewegungsrichtung einer Bewegung des mindestens einen Datenträgers quer relativ zu einer Längserstreckungsrichtung des mindestens einen Hohlwellenleiters. Es lässt sich dadurch auf einfache Weise überwachen, ob der mindestens eine Datenträger den Hohlwellenleiter gewissermaßen überquert oder nicht.

Günstig ist es, wenn der mindestens eine Datenträger bezüglich einer Schreibseite/Leseseite dem mindestens einen Schlitz des mindestens einen Hohlwellenleiters zugewandt ist. Dadurch lässt sich auf einfache Weise ein Schreiben und Lesen durchführen.

Die nachfolgende Beschreibung bevorzugter Ausführungsformen dient im Zusammenhang mit den Zeichnungen der näheren Erläuterung der Erfindung. Es zeigen:

Figur 1        eine schematische Vorderansicht eines Ausführungsbeispiels eines erfindungsgemäßen Identifikationssystems;

Figur 2        eine Ansicht des Identifikationssystems gemäß Figur 1 in der Richtung A;

Figur 3        eine Teildarstellung eines Ausführungsbeispiels eines rechteckigen Hohlwellenleiters;

Figur 4        eine Teildarstellung eines weiteren Ausführungsbeispiels eines rechteckigen Hohlwellenleiters;

Figur 5        eine Draufsicht auf das Identifikationssystem gemäß Figur 1 in der Richtung B bei einem Ausführungsbeispiel des rechteckigen Hohlwellenleiters;

Figur 6                    eine schematische Seitenansicht eines weiteren Ausführungsbeispiels eines Hohlwellenleiters;

Figur 7                    eine Teildarstellung des rechteckigen Hohlwellenleiters gemäß Figur 6; und

Figur 8(a) und 8(b)        Darstellungen eines weiteren Ausführungsbeispiels eines rechteckigen Hohlwellenleiters mit Schlitzstruktur.

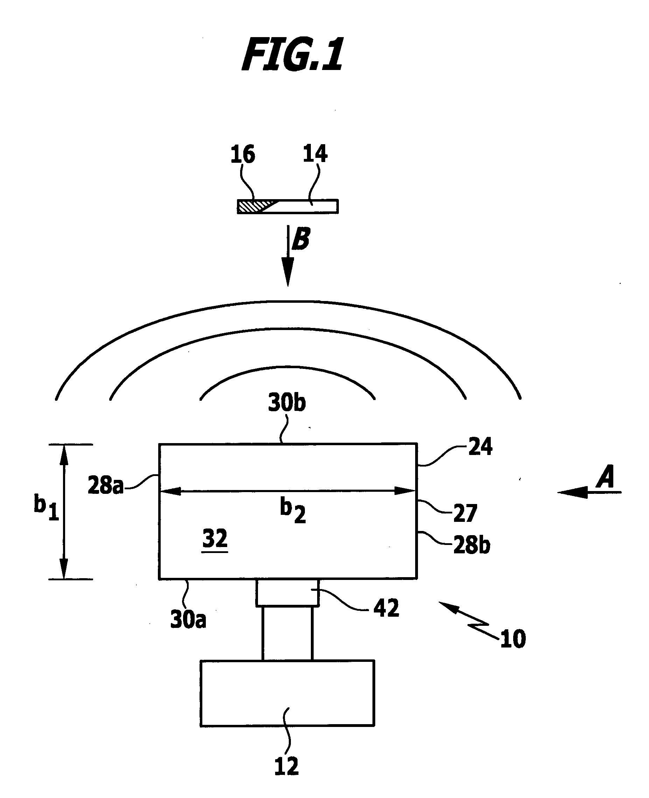

Ein Ausführungsbeispiel eines erfindungsgemäßen Identifikationssystems, welches in Figur 1 gezeigt und dort mit 10 bezeichnet ist, umfasst eine Schreib-/Leseeinrichtung 12 und (mindestens) einen Datenträger 14. Der Datenträger 14 ist an einer Anwendung fixiert. Die Anwendung kann dabei stationär sein oder sie kann beweglich sein. Bei einer stationären Anwendung kann beispielsweise mittels des Datenträgers 14 überwacht werden, ob die Anwendung an einer vorgegebenen Position vorhanden ist oder nicht. Bei einer mobilen Anwendung kann mittels des Datenträgers 14 überwacht werden, ob diese sich beispielsweise an vorgegebenen Stellen vorbeibewegt.

Der Datenträger 14 weist (mindestens) einen nicht flüchtigen Speicher 16 auf, in welchem sich Daten beispielsweise zur Identifizierung der Anwendung speichern lassen.

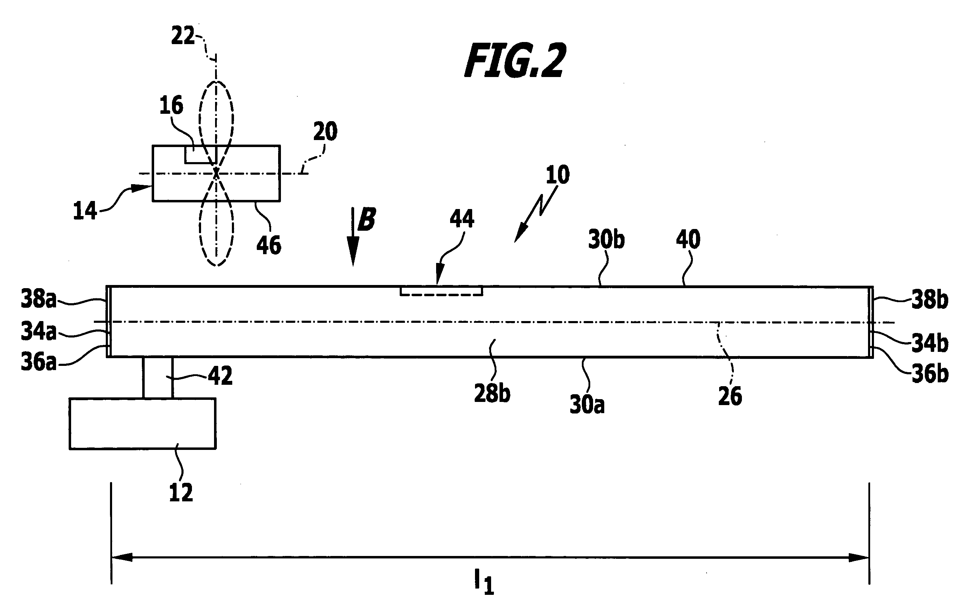

Der Datenträger 14 weist insbesondere eine Antenneneinrichtung 18 (vgl. Figur 2) mit einer Achse 20 auf. Die Achse 20 liegt senkrecht zur einer Dipolachse 22. Über die Antenneneinrichtung 18 lassen sich Daten empfangen, welche von der Schreib-/Leseeinrichtung 12 gesendet werden bzw. es lassen sich Daten an die Schreib-/Leseeinrichtung 12 senden.

Der Datenaustausch im Identifikationssystem 10, das heißt zwischen der Schreib-/Leseeinrichtung 12 und dem Datenträger 14, erfolgt beispielsweise im UHF-Bereich, das heißt in einem Frequenzbereich zwischen 0,3 GHz und 3 GHz. Bei einem Ausführungsbeispiel erfolgt der Datenaustausch bei einer Frequenz von 868 MHz. Die Wellenlänge im UHF-Bereich liegt im Dezimeterbereich.

Der Datenträger 14 ist so ausgebildet, dass er keine eigene Energieversorgungseinrichtung aufweist, sondern die notwendige Energie zu dessen Betrieb und insbesondere zum Empfang bzw. Senden von Daten über das von der Schreib-/Leseeinrichtung 12 gesandte elektromagnetische Feld bereitgestellt wird.

Der Datenträger 14 ist insbesondere ein RFID-Datenträger.

An die Schreib-/Leseeinrichtung 12 ist (mindestens) ein Hohlwellenleiter 24 angeschlossen. Beispielsweise hat der Hohlwellenleiter 24 einen rechteckigen Querschnitt. Der rechteckige Hohlwellenleiter 24 erstreckt sich in einer Längserstreckungsrichtung längs einer Längserstreckungsachse 26 (Figur 2) und weist ein Rohr 27 auf. Die Längserstreckungsachse 26 ist gerade. Der rechteckige Hohlwellenleiter 24 hat eine erste Längsseite 28a und eine gegenüberliegende zweite Längsseite 28b. Die erste Längsseite 28a und die zweite Längsseite 28b liegen parallel zur Längserstreckungsachse 26. Die erste Längsseite 28a und die zweite Längsseite 28b sind parallel zueinander orientiert. Sie weisen eine gleiche Breite $b_1$ senkrecht zu der Längserstreckungsachse 26 auf. Ferner weisen sie eine gleiche Länge $l_1$ in der Längserstreckungsrichtung auf.

Die erste Längsseite 28a und 28b sind sowohl an ihrer jeweiligen Innenseite (wobei die Innenseiten der ersten Längsseite 28a und der zweiten Längsseite 28b einander zugewandt sind) als auch an ihren Außenseiten (wobei die Außenseiten der ersten Längsseite 28a und der zweiten Längsseite 28b abgewandt sind) eben ausgebildet.

Der rechteckige Hohlwelleneiter 24 umfasst ferner eine dritte Längsseite 30a und eine vierte Längsseite 30b. Die dritte Längsseite 30a und die vierte Längsseite 30b sind beabstandet zueinander, wobei der Abstand die Breite $b_1$ ist. Die dritte Längsseite 30a und die vierte Längsseite 30b sind parallel zueinander ausgerichtet. Die dritte Längsseite 30a und die vierte Längsseite 30b sind jeweils senkrecht zu der ersten Längsseite 28 und der zweiten Längsseite 28b orientiert und mit diesen verbunden. Die dritte Längsseite 30a und die vierte Längsseite 30b weisen eine Breite $b_2$ senkrecht zu der Längserstreckungsachse 26 auf. Die erste Längsseite 28a und die zweite Längsseite 28b sind mit der Breite $b_2$ beabstandet zueinander.

Die dritte Längsseite 30a und die vierte Längsseite 30b sind an ihren zugewandten Innenseiten und an ihren abgewandten Außenseiten jeweils eben ausgebildet.

Die Breite $b_1$ und die Breite $b_2$ sind unterschiedlich, sodass der Hohlwellenleiter 24 im Querschnitt rechteckig ist.

Der rechteckige Hohlwellenleiter 24 weist einen Hohlraum 32 in dem Rohr auf, welcher von den Längsseiten 28a, 28b, 30a, 30b begrenzt ist. Dieser Hohlraum 32 hat die Gestalt einer Säule mit rechteckiger Basis.

Der rechteckige Hohlwellenleiter 24 weist ein erstes Stirnende 34a und ein zweites Stirnende 34b auf. An einer ersten Stirnseite 36a, an welcher das erste Stirnende 34a liegt, ist der rechteckige Hohlwellenleiter 24 und dadurch auch das Rohr 27 und der Hohlraum 32 durch eine erste Kurzschlussplatte 38 geschlossen, welche stirnseitig mit der ersten Längsseite 28a, der zweiten Längsseite 28b, der dritten Längsseite 30a und der vierten Längsseite 30b verbunden ist. Auf entsprechende Weise ist eine zweite Stirnseite 36b an dem zweiten Stirnende 34b durch eine zweite Kurzschlussplatte 38b geschlossen. Es ist dadurch ein Gehäuse 40 aus einem elektrisch leitenden Material gebildet, in welchem der Hohlraum 32 liegt. Das Gehäuse mit den Längsseiten 28a, 28b, 30a, 30b und den Kurzschlussplatten 38a, 38b ist aus einem metallischen Material hergestellt.

Bei dem Ausführungsbeispiel gemäß den Figuren 1 und 2 ist an der dritten Längsseite 30a ein Anschluss 42 angeordnet, an welchen die Schreib-/Leseeinrichtung 12 angeschlossen bzw. anschließbar ist.

Bei einer Ausführungsform ist der Anschluss 42 an oder in der Nähe eines Stirnendes 34a bzw. 34b angeordnet. Es ist insbesondere an einer Breitseite 30a angeordnet. Der Anschluss 42 ist dabei insbesondere näher zu dem einen Stirnende angeordnet als zu dem anderen. (Bei dem Ausführungsbeispiel gemäß den Figuren 1 und 2 ist der Anschluss 42 näher zu dem ersten Stirnende 34a angeordnet.) Der Hohlwellenleiter 24 wird insbesondere an dem Anschluss 42 über ein Antennenkabel (mit Wellenwiderstand 50 $\Omega$) gespeist.

Bei einer Ausführungsform ist ein Abstand des Anschlusses 42 zu dem zweiten Stirnende 34b mindestens dreifach so groß wie der Abstand zu dem ersten Stirnende 34a.

In dem Hohlraum 32 ist ein Dielektrikum angeordnet. Bei einem Ausführungsbeispiel ist das Dielektrikum Luft.

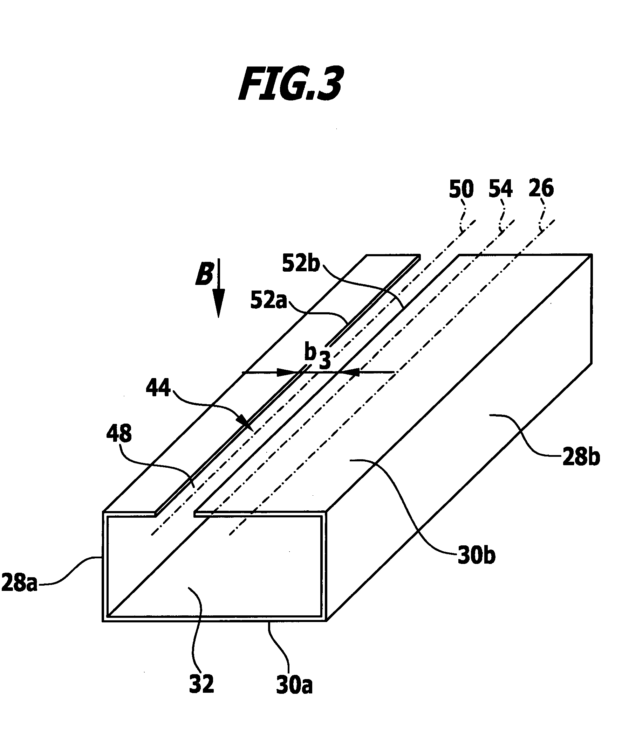

Zur Auskopplung von elektromagnetischen Wellen weist der rechteckige Hohlwellenleiter 24 eine Schlitzstruktur 44 auf (Figuren 3 bis 7). Dadurch ist ein Leckwellenleiter gebildet. Die Schlitzstruktur 44 ist an derjenigen Längsseite des rechteckigen Hohlwellenleiter 24 angeordnet, welche dem Datenträger 14 mit seiner Antenneneinrichtung 18 und damit einer Schreibseite/Leseseite 46 zugewandt ist.

Die Schlitzstruktur 44 ist insbesondere an derjenigen Längsseite des rechteckigen Hohlwellenleiters 24 angeordnet, welche dem Anschluss 42 gegenüberliegt. Bei dem Ausführungsbeispiel gemäß den Figuren 1 und 2 ist dann die Schlitzstruktur 44 an der vierten Längsseite 30b angeordnet.

Die Schlitzstruktur 44 ist bezüglich Anordnung und Ausbildung von einem oder mehreren Schlitzen angepasst an die Anwendung. Die Schlitzstruktur 44 umfasst mindestens einen Schlitz 48 (vgl. beispielsweise Figur 3), welcher zwischen einem Außenraum außerhalb des rechteckigen Hohlwellenleiters 24 und dem Hohlraum 32 durchgehend ist, sodass der rechteckige Hohlwellenleiter 24 über die Schlitzstruktur 44 elektromagnetische Wellen als Leckwellen "abgeben" kann.

Der Schlitz 48 weist eine Längserstreckung in einer Achse 50 (Längserstreckungsachse) auf, welche parallel zu der Längserstreckungsachse 26 des rechteckigen Hohlwellenleiters 24 ist. Der Schlitz 48 weist eine Breite $b_3$ senkrecht zu der Längserstreckungsachse 50 auf, welche über die Länge des Schlitzes 48 in der Längserstreckungsachse 50 konstant ist. Der Schlitz 48 einschließlich Begrenzungswänden 52a, 52b, zwischen welchen der Schlitz 48 gebildet ist, ist parallel zu der Längsseite 28a bzw. der zweiten Längsseite 28b orientiert.

Der mindestens eine Schlitz 48 kann mittig an der Längsseite 30b angeordnet sein oder, wie in Figur 3 gezeigt, versetzt zu einer Mittellinie 54 der Längsseite 30b.

Es kann vorgesehen sein, wie in Figur 3 gezeigt, dass die Längsseite 30b, an welcher die Schlitzstruktur 44 gebildet ist, die Längsseite mit der größeren Breite ($b_2 > b_1$) ist.

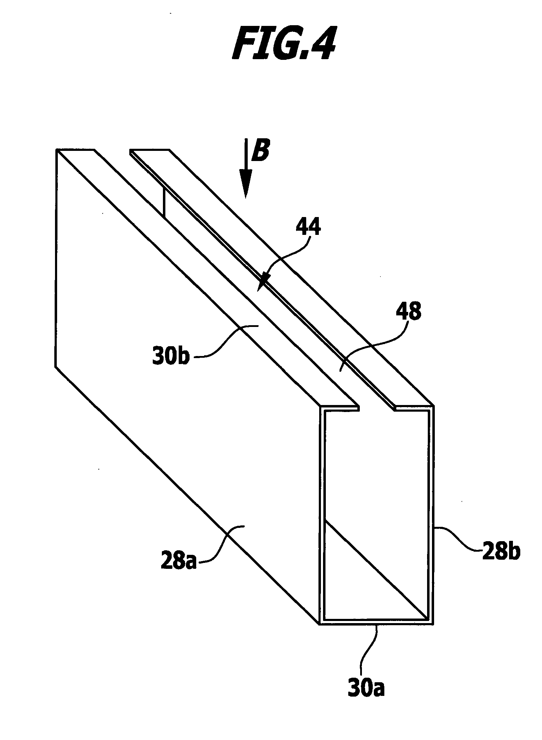

Es ist auch möglich, wie in Figur 4 gezeigt, dass die Schlitzstruktur 44 an der Längsseite 30b sitzt, welche die kleinere Breite ($b_2 < b_1$) aufweist.

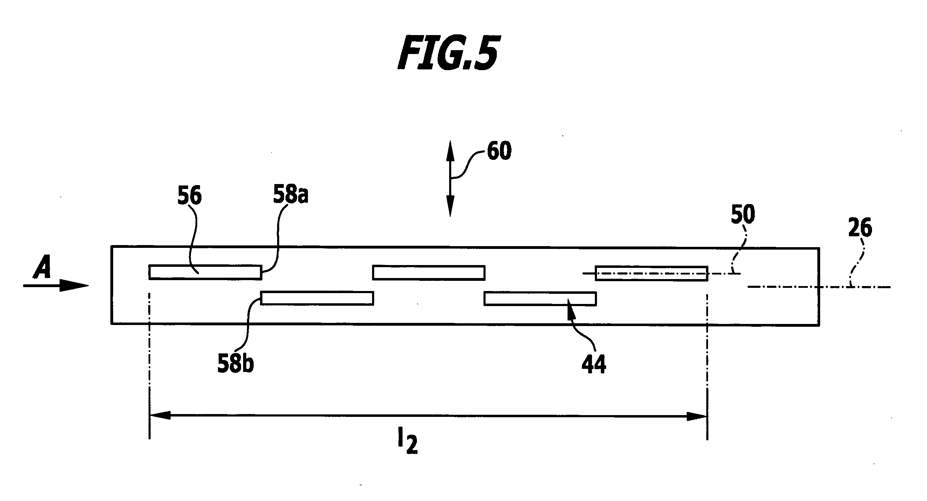

Der rechteckige Hohlwellenleiter 24 weist eine effektive Länge $l_2$ (Figur 5) auf. Die effektive Länge $l_2$ ist diejenige Länge des rechteckigen Hohlwellenleiters 24 an der vierten Längsseite 30b mit der Schlitzstruktur 44, welche mit dieser Schlitzstruktur 44 versehen ist, um eine Abstrahlung von elektromagnetischen Wellen zu ermöglichen.

Es ist insbesondere vorgesehen, dass die Schlitzstruktur 44 sich über die gesamte effektive Länge $l_2$ erstreckt, sodass über die gesamte effektive Länge $l_2$ Leckwellen abgebbar sind und ein Schreiben bzw. Lesen ohne Unterbrechungsbereiche möglich ist.

Dies kann beispielsweise dadurch erreicht werden, dass sich ein Schlitz über die gesamte effektive Länge $l_2$ erstreckt. Es ist auch möglich, wie in Figur 5 gezeigt, dass eine Mehrzahl von Schlitzen 56 vorhanden sind, wobei benachbarte Schlitze 56 quer zu der Längserstreckungsachse 50 eines jeweiligen Schlitzes 56 versetzt sind. Der Versatz ist so, dass ein Ende 58a eines Schlitzes auf einer Linie mit einem Ende 58b eines benachbarten Schlitzes liegt, oder dass sogar ein Überlapp bezogen auf die Längserstreckungsachse 50 (und damit auch auf die Längserstreckungsachse 26) vorliegt.

Bei einer Ausführungsform ist der Datenträger 14 außerhalb des Hohlraums 32 positioniert (Figuren 3 bis 5). Wenn eine relative Bewegung des Datenträgers 14 zu dem rechteckigen Hohlwellenleiter 24 stattfindet, dann ist eine Bewegungsrichtung 60 (Figur 5) insbesondere quer zu der Längserstreckungsachse 26 des rechteckigen Hohlwellenleiters 24 bzw. quer zu der Längserstreckungsachse 50 des mindestens einen Schlitzes 48 bzw. 56.

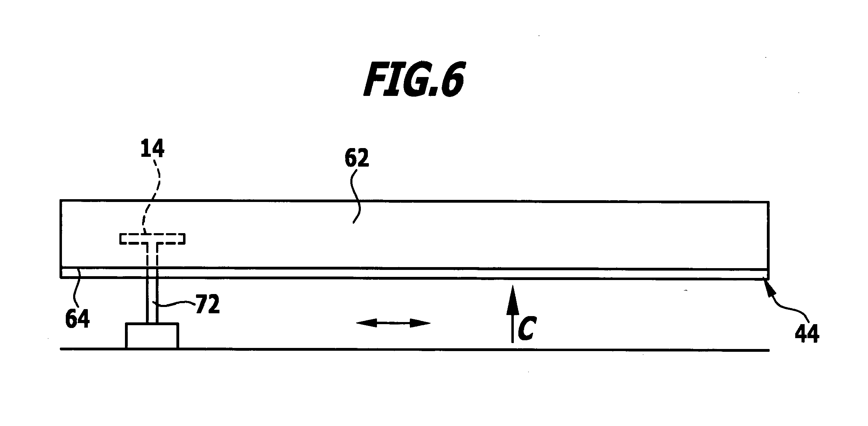

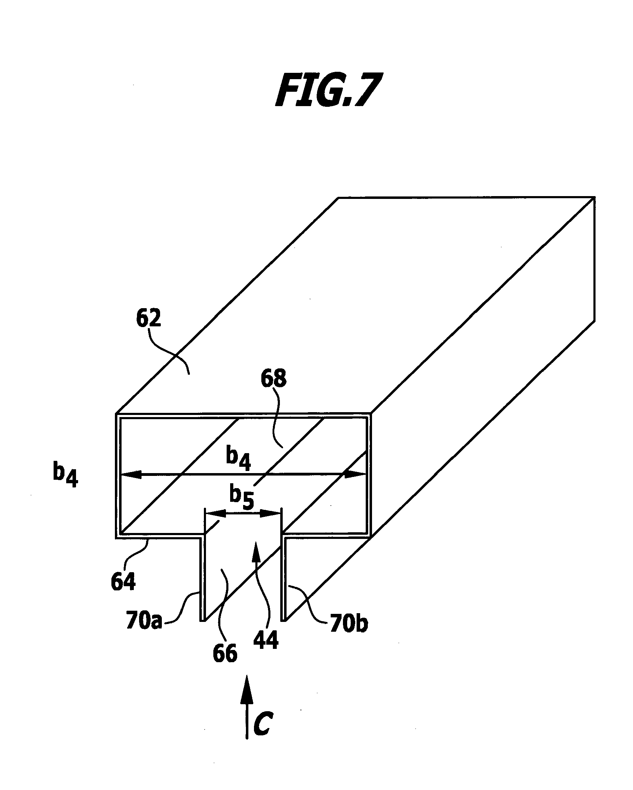

Bei einem weiteren Ausführungsbeispiel (Figuren 6 und 7) ist ein rechteckiger Hohlwellenleiter 62 vorgesehen, welcher an einer Längsseite 64 mit mindestens einem Schlitz 66 versehen ist. Der Hohlwellenleiter 62 weist eine Breite $b_4$ auf. Der Schlitz hat eine Breite $b_5$ (in einer Richtung parallel zu der Breitenrichtung des Hohlwellenleiters 62).

Der Schlitz 66 kann dabei mittig oder versetzt an dieser Längsseite 64 angeordnet sein. Der rechteckige Hohlwellenleiter 62 weist dabei einen Hohlraum 68 auf. An der Längsseite 64 sind von dieser nach außen weisend (das heißt von dem Hohlraum 68 weg) gegenüberliegende Wände 70a, 70b angeordnet. Diese Wände 70a, 70b sind parallel zueinander und erheben sich quer und insbesondere senkrecht über der Längsseite 64. Ein Abstand dieser Wände 70a, 70b entspricht der Breite des Schlitzes 66. Die Wände 70a, 70b sind aus einem metallischen Material und insbesondere aus dem gleichen Material wie das entsprechende Gehäuse des rechteckigen Hohlwellenleiters 62.

Die Lage des Schlitzes 66 und die Anordnung der Wände 70a, 70b (insbesondere deren Höhe) ist angepasst an eine spezielle Anwendung.

Die Breite $b_5$ des Schlitzes 66 ist insbesondere kleiner als $0,4\,b_4$. Der Schlitz 66 ist insbesondere mittig (bezogen auf die Breitenrichtung mit der Breite $b_4$) des rechteckigen Hohlwellenleiters 62 angeordnet.

Durch den Schlitz 66 hindurch erfolgt aufgrund der Wände 70a, 70b keine Abstrahlung ins Freie; die Wände 70a, 70b ("aufgesetzter Kamin") führen dazu, dass das Wellenfeld nach außen hin exponentiell abklingt. Für Wandhöhen, die größer als die Breite $b_5$ des Schlitzes 66 sind, ist bei symmetrischem Aufbau praktisch kein Außenfeld nachweisbar.

Ein Datenträger 14 ist bei dieser Ausführungsform in dem Hohlraum 68 positioniert bzw. in diesem beweglich. Der Datenträger 14 sitzt dazu an einem Halter 72. Der Halter 72 ist durch den Raum zwischen den Wänden 70a, 70b und den Schlitz 66 durchgetaucht und in dem Hohlraum 68 positioniert.

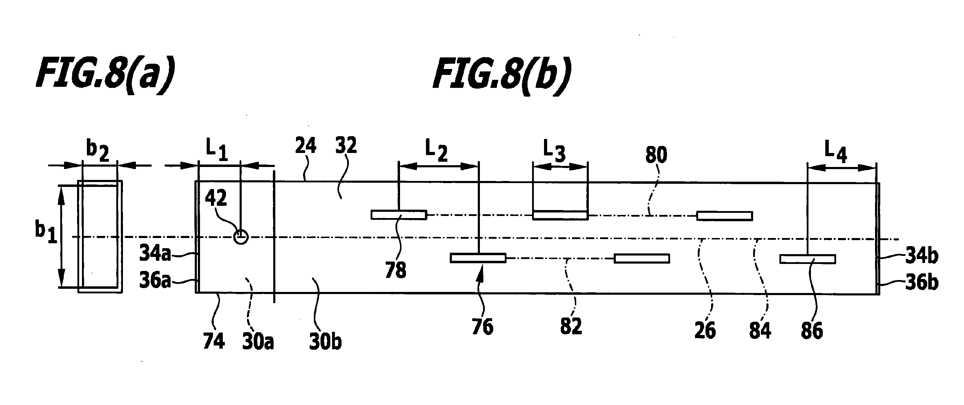

Bei einem weiteren Ausführungsbeispiel eines rechteckigen Hohlwellenleiters ist dieser grundsätzlich gleich ausgebildet wie der Hohlwellenleiter 24. Es werden deshalb in den Figuren 8(a) und (b) gleiche Bezugszeichen verwendet.

Der Hohlwellenleiter weist einen Antennen-Feeder 74 auf. In diesem ist der Anschluss 42 angeordnet. Er liegt an einer Breitseite 30b, wobei diese Breitseite 30b derjenigen Breitseite gegenüberliegt, an welcher eine Schlitzstruktur 76 angeordnet ist.

Der Anschluss 42 weist einen Abstand $L_1$ zu der ersten Stirnseite 36a auf.

Die Schlitzstruktur 62 umfasst eine Mehrzahl von Schlitzen 78. Die Schlitze 78 sind in einer ersten Reihe 80 und in einer zweiten Reihe 82 angeordnet. Die erste Reihe 80 und die zweite Reihe 82 sind parallel zueinander ausgerichtet. Sie weisen einen gleichen Abstand zu einer Mittellinie 84 auf. Der Anschluss 42 ist mittig angeordnet, das heißt eine Projektion des Anschlusses 42 durchstößt die Mittellinie 84.

Die Schlitze 78 sind parallel zu der jeweiligen ersten Reihe 80 bzw. zweiten Reihe 82 ausgerichtet. Sie sind in der ersten Reihe 80 und der zweiten Reihe 82 alternierend angeordnet. Ein Abstand zwischen benachbarten Schlitzen 78 beträgt dabei $L_2$. Eine Schlitzlänge beträgt $L_3$. Ein Abstand des äußersten Schlitzes 86, welcher nächstliegend dem zweiten Stirnende 36b ist (und maximalen Abstand zu dem ersten Stirnende 34a aufweist), beträgt $L_4$.

Zwischen benachbarten Schlitzen in der ersten Reihe 80 bzw. zweiten Reihe 82 besteht eine Lücke. Diese Lücke hat vorzugsweise eine größere Länge als $L_3$.

Die Wellenlänge der elektromagnetischen Wellen im Außenraum beträgt $\lambda_a$ ("Freiraumwellenlänge"). Die Wellenlänge von elektromagnetischen Wellen im Hohlraum 32 beträgt $\lambda_h$.

Für Wellen in dem Hohlraum 32 existiert eine Cut-off-Frequenz

$$f_c = \frac{1}{\sqrt{\varepsilon_R}} \bullet \frac{c}{2 \cdot b_1} \qquad\qquad (1)$$

$\varepsilon_R$ ist dabei die Dielektrizitätskonstante und $c$ die Lichtgeschwindigkeit.

Grundsätzlich gilt für den Zusammenhang zwischen $\lambda_h$ und $\lambda_a$ die Beziehung

$$\lambda_h = \frac{\lambda_a}{\sqrt{1 - \left(\dfrac{\lambda_a}{2b_1}\right)^2}} \qquad\qquad (2)$$

Es ist vorteilhaft, wenn $L_1$ mindestens näherungsweise $\lambda_h/4$ beträgt. Ferner ist es günstig, wenn der Abstand $L_2$ von in der Längserstreckungsrichtung 26 nächstbenachbarten Schlitzen 78 $\lambda_h/2$ beträgt. Ferner ist es günstig, wenn mindestens näherungsweise die Länge $L_3$ eines Schlitzes 78 $\lambda_a/2$ beträgt. Weiterhin ist es günstig, wenn mindestens näherungsweise der Abstand $L_4$ $\lambda_h/4$ beträgt. Es ergibt sich dadurch eine optimale Abstrahlungscharakteristik für die vorliegende Anwendung.

Das Identifikationssystem 10 funktioniert wie folgt:

Bei einem Schreibvorgang wird angesteuert durch die Schreib-/Leseeinrichtung 12 durch den rechteckigen Hohlwellenleiter 24 bzw. 62 eine elektromagnetische Welle als Leckwelle über die Schlitzstruktur 44 abgestrahlt. Insbesondere im Nahbereich des rechteckigen Hohlwellenleiters 24 bzw. 62, welcher die Größenordnung einer halben Wellenlänge hat, kann eine effektive Ankopplung an den Datenträger 14 zum Beschreiben des Datenträgers 14 erfolgen. Der Datenträger 14 ist dazu mit seiner Schreibseite/Leseseite 46 auf den rechteckigen Hohlwellenleiter 24 so ausgerichtet, dass diese der Schlitzstruktur 44 gegenüberliegt.

Beim Lesen eines Datenträgers 14 wird entsprechend vorgegangen.

Im Nahbereich (für Abstände bis 1 m oder mehr) liegt eine hohe Homogenität des Ankopplungsfelds zwischen dem rechteckigen Hohlwellenleiter 24 bzw. 62 und dem Datenträger 14 vor.

In dem rechteckigen Hohlwellenleiter 24 bzw. 62 bildet sich insbesondere eine $H_{10}$-Welle aus, die im Außenraum eine Leckwelle erzeugt. Man erhält dann durch den rechteckigen Hohlwellenleiter 24 bzw. 62 mit der Schlitzstruktur 44 eine gute und hohe Abstrahlung mit definierter Abstrahlungscharakteristik.

Die Anordnung und Ausbildung der Schlitzstruktur 44 ist an die Anwendung angepasst. Der mindestens eine Schlitz 48 kann koaxial zu der Mittellinie 54 ausgerichtet sein oder versetzt zu dieser. Es kann genau ein Schlitz vorgesehen sein oder es können mehrere Schlitze vorgesehen sein. Wenn mehrere Schlitze vorgesehen sind, dann können diese je nach Anwendung angepasste Versatze zueinander aufweisen.

Durch ein erfindungsgemäßes Identifikationssystem 10 ist es beispielsweise möglich, eine Objektidentifikation auf Freiflächenlager oder Palettenlager durchzuführen. Dazu wird beispielsweise ein bewegliches Objekt wie ein Lagerobjekt oder eine Palette mit einem Datenträger 14 versehen. Wenn ein Datenträger 14 in den Nahbereich eines rechteckigen Hohlwellenleiters 24 bzw. 62 gelangt (durch Bewegung des Objekts und/oder des rechteckigen Hohlwellenleiters 24, 62), ist eine Objektidentifikation möglich. Beispielsweise ist dadurch auch eine Behälteridentifikation an einem Hochregallager möglich.

Ein weiteres Anwendungsbeispiel ist am Gebäudemanagement zur Überwachung von Gerätschaften und Gegenständen. Wenn die Gerätschaften und Gegenstände jeweils mit Datenträgern 14 versehen werden und ein Durchgang mit einem oder mehreren rechteckigen Hohlwellenleitern 24, 62 versehen werden, dann lässt sich überwachen, ob Gerätschaften und Gegenstände über den Durchgang den überwachten Bereich verlassen haben.

Weiterhin lassen sich dadurch auch Tore und Türeinfahrten wie von Lagerhallen und Logistikzentren überwachen.

Es lassen sich dadurch auch Ladungsträger wie Container, Palettengestelle bei der Übergabe (beim Einlagern und Auslagern) überwachen. Der Übergabeplatz wird mit einer oder mehreren rechteckigen Hohlwellenleitern 24, 62 versehen und die Ladungsträger werden mit einem oder mehreren Datenträgern 14 versehen.

**Bezugszeichenliste**

| | |
|---|---|
| 10 | Identifikationssystem |
| 12 | Schreib-/Leseeinrichtung |
| 14 | Datenträger |
| 16 | Speicher |
| 18 | Antenneneinrichtung |
| 20 | Achse |
| 22 | Dipolachse |
| 24 | Rechteckiger Hohlwellenleiter |
| 26 | Längserstreckungsachse |
| 27 | Rohr |
| 28a | Erste Längsseite |
| 28b | Zweite Längsseite |
| 30a | Dritte Längsseite |
| 30b | Vierte Längsseite |
| 32 | Hohlraum |
| 34a | Erstes Stirnende |
| 34b | Zweites Stirnende |
| 36a | Erste Stirnseite |
| 36b | Zweite Stirnseite |
| 38a | Erste Kurzschlussplatte |
| 38b | Zweite Kurzschlussplatte |
| 40 | Gehäuse |
| 42 | Anschluss |
| 44 | Schlitzstruktur |
| 46 | Schreibseite/Leseseite |
| 48 | Schlitz |
| 50 | Längserstreckungsachse |
| 52a, b | Begrenzungswand |
| 54 | Mittellinie |

| 56 | Schlitz |
|---|---|
| 58a, b | Ende |
| 60 | Bewegungsrichtung |
| 62 | Rechteckiger Hohlwellenleiter |
| 64 | Längsseite |
| 66 | Schlitz |
| 68 | Hohlraum |
| 70a, b | Wand |
| 72 | Halter |
| 74 | Antennen-Feeder |
| 76 | Schlitzstruktur |
| 78 | Schlitz |
| 80 | Erste Reihe |
| 82 | Zweite Reihe |
| 84 | Mittellinie |
| 86 | Schlitz |
| $b_1$, $b_2$ | Breite senkrecht zur Längserstreckungsrichtung |
| $l_1$ | Länge in Längserstreckungsrichtung |
| $b_3$ | Schlitzbreite |
| $l_2$ | Effektive Länge |
| $b_4$ | Breite senkrecht zur Längserstreckungsrichtung |
| $b_5$ | Schlitzbreite |
| $L_1$ | Abstand Anschluss zu Stirnende |
| $L_2$ | Abstand von Schlitzen |
| $L_3$ | Länge eines Schlitzes |
| $L_4$ | Abstand Schlitz zu Stirnende |
| $\lambda_a$ | Wellenlänge im Freiraum |
| $\lambda_h$ | Wellenlänge im Hohlwellenleiter |

**Patentansprüche**

1. Identifikationssystem, umfassend mindestens einen Datenträger (14), an welchem Daten gespeichert oder speicherbar sind, und mindestens eine Schreib-/Leseeinrichtung (12), durch welche Daten in einen Speicher (16) des Datenträgers (14) berührungslos schreibbar sind und/oder Daten aus dem Speicher (16) berührungslos auslesbar sind, **dadurch gekennzeichnet, dass** an der mindestens einen Schreib-/Leseeinrichtung (12) mindestens ein Hohlwellenleiter (24; 62) angeordnet ist, welcher an einer Längsseite (30b; 64) Schlitze (48; 66) aufweist, und dass ein Abstand ($L_4$) eines äußeren Schlitzes (86) zu dem nächstliegenden Stirnende (36b) mindestens näherungsweise 25 % einer Hohlwellenleiter-Wellenlänge ($\lambda_h$) beträgt.

2. Identifikationssystem nach Anspruch 1, **dadurch gekennzeichnet, dass** der Hohlwellenleiter (24; 62) als starres Rohr (27) ausgebildet ist oder ein starres Rohr (27) umfasst.

3. Identifikationssystem nach Anspruch 1 oder 2, **dadurch gekennzeichnet, dass** Schlitze (48; 66) an der gleichen Längsseite (30b; 64) angeordnet sind und/oder dass Schlitze (48; 66) parallel zu einer Längserstreckungsrichtung des mindestens einen Hohlwellenleiters (24; 62) angeordnet sind.

4. Identifikationssystem nach einem der vorangehenden Ansprüche, **dadurch gekennzeichnet, dass** der mindestens eine Hohlwellenleiter (24; 62) an seinen Stirnseiten (36a; 36b) jeweils mit einer Kurzschlussplatte (38a; 38b) geschlossen ist.

5. Identifikationssystem nach einem der vorangehenden Ansprüche, **dadurch gekennzeichnet, dass** an dem mindestens einen Hohlwellenleiter (24; 62) mindestens ein Anschluss (42) für die mindestens eine Schreib-/Leseeinrichtung (12) angeordnet ist, und insbesondere, dass der mindestens eine Anschluss (42) der Längsseite (30b; 64) gegenüberliegt, an welcher Schlitze (48; 66) angeordnet sind, und insbesondere, dass der mindestens eine Anschluss (42) an einer Breitseite (30a) eines rechteckigen Hohlwellenleiters (24; 62) angeordnet ist, und insbesondere, dass der mindestens eine Anschluss (42) an oder in der Nähe eines Stirnendes (34a) des mindestens einen rechteckigen Hohlwellenleiters (24) angeordnet ist und insbesondere näher zu einem ersten Stirnende (34a) liegt als einem dem ersten Stirnende (34a) gegenüberliegenden zweiten Stirnende (34b) und insbesondere der Abstand zu dem zweiten Stirnende (34b) mindestens dreifach größer ist als der Abstand zu dem ersten Stirnende (34a), und insbesondere, dass der mindestens eine Anschluss (42) in einem Abstand ($L_1$) zu dem nächstliegenden Stirnende (34a) liegt, welcher mindestens näherungsweise 25 % einer Hohlwellenleiter-Wellenlänge ($\lambda_h$) beträgt.

6.  Identifikationssystem nach einem der vorangehenden Ansprüche, **dadurch gekennzeichnet, dass** der mindestens eine Hohlwellenleiter (24; 62) einen Hohlraum (32; 68) aufweist und dass Schlitze (48; 66) zwischen dem Hohlraum (32; 68) und dem Außenraum durchgehend sind und/oder dass der mindestens eine Hohlwellenleiter (24; 62) einen Hohlraum (32; 68) aufweist, in welchem ein Dielektrikum angeordnet ist.

7.  Identifikationssystem nach einem der vorangehenden Ansprüche, **dadurch gekennzeichnet, dass** der Hohlwellenleiter (24; 62) einen rechteckigen Querschnitt hat.

8.  Identifikationssystem nach einem der vorangehenden Ansprüche, **dadurch gekennzeichnet, dass** der mindestens eine Hohlwellenleiter (24) eine erste Längsseite (28a) und eine zweite Längsseite (28b) aufweist, wobei die zweite Längsseite (28b) beabstandet zu der ersten Längsseite (28a) ist und parallel zu dieser orientiert ist, und eine dritte Längsseite (30a) und eine vierte Längsseite (30b) aufweist, wobei die vierte Längsseite (30b) beabstandet zu der dritten Längsseite (30a) ist, parallel zu dieser orientiert ist und die dritte Längsseite (30a) senkrecht zu der ersten Längsseite (28a) orientiert ist, und insbesondere, dass die erste Längsseite (28a) und die dritte Längsseite (30a) unterschiedliche Breiten ($b_1$; $b_2$) aufweisen und die erste Längsseite (28a) und die zweite Längsseite (28b) die gleiche Breite ($b_1$) und die dritte Längsseite (30a) und die vierte Längsseite (30b) die gleiche Breite ($b_2$) aufweisen.

9.  Identifikationssystem nach einem der vorangehenden Ansprüche, **dadurch gekennzeichnet, dass** der mindestens eine Datenträger (14) außerhalb eines Hohlraums (32) des mindestens einen Hohlwellenleiters (24) positioniert ist und/oder geführt ist oder dass der mindestens eine Datenträger (14) innerhalb eines Hohlraums (68) des mindestens einen Hohlwellenleiters (62) positioniert ist und/oder geführt ist, und insbesondere, dass der mindestens eine Datenträger (14) an einem Halter (72) sitzt, welcher durch den mindestens einen Schlitz (66) durchgetaucht ist.

10. Identifikationssystem nach einem der vorangehenden Ansprüche, **dadurch gekennzeichnet, dass** Schlitze (66) zwischen gegenüberliegenden Wänden (70a, 70b) sitzen, welche quer und insbesondere senkrecht über die Längsseite (64) abstehen, an welcher Schlitze (66) angeordnet sind, wobei die Wände (70a, 70b) in den Außenraum weisen, und insbesondere, dass die gegenüberliegenden Wände (70a, 70b) parallel ausgerichtet sind, und insbesondere, dass ein Abstand der gegenüberliegenden Wände (70a, 70b) der Breite von Schlitzen (66) entspricht, und insbesondere, dass Schlitze (66) und die Wände (70a, 70b) so dimensioniert sind, dass der Hohlwellenleiter (68) nicht nach außen abstrahlt.

11. Identifikationssystem nach einem der vorangehenden Ansprüche, **dadurch gekennzeichnet, dass** Schlitze (48; 66) über ihre Längserstreckungsrichtung eine konstante Breite ($b_3$) haben, und insbesondere, dass Schlitze (48; 66) eine größere Länge ($l_1$) in ihrer Längserstreckungsrichtung haben als eine Breite ($b_3$) quer zu der Längserstreckungsrichtung.

12. Identifikationssystem nach einem der vorangehenden Ansprüche, **dadurch gekennzeichnet, dass** ein Abstand ($L_2$) von benachbarten Schlitzen (78) mindestens näherungsweise 50 % einer Hohlwellenleiter-Wellenlänge ($\lambda_h$) beträgt und/oder dass eine Länge ($L_3$) eines Schlitzes (78) mindestens näherungsweise 50 % einer Freiraumwellenlänge ($\lambda_a$) beträgt.

13. Identifikationssystem nach einem der vorangehenden Ansprüche, **gekennzeichnet durch** eine Mehrzahl von Schlitzen (78), wobei benachbarte Schlitze quer zueinander versetzt sind, und insbesondere **gekennzeichnet durch** mindestens eine erste Reihe (80) von Schlitzen (78) und eine zweite Reihe (82) von Schlitzen (78), wobei insbesondere die erste Reihe (80) und die zweite Reihe (82) parallel beabstandet sind, und insbesondere, dass die erste Reihe (80) und die zweite Reihe (82) jeweils beabstandet zu einer Mittellinie (84) sind, und insbesondere, dass die Schlitze (78) in der ersten Reihe (80) und der zweiten Reihe (82) alternierend angeordnet sind.

14. Identifikationssystem nach einem der vorangehenden Ansprüche, **dadurch gekennzeichnet, dass** der mindestens eine Datenträger (14) keine eigene Energiequelle hat und die Energie für den Datenaustausch mit der mindestens einen Schreib-/Leseeinrichtung (12) durch die mindestens eine Schreib-/Leseeinrichtung (12) bereitgestellt ist.

**15.** Identifikationssystem nach einem der vorangehenden Ansprüche, **dadurch gekennzeichnet, dass** eine Bewegungsrichtung (60) einer Bewegung des mindestens einen Datenträgers (14) quer relativ zu einer Längserstreckungsrichtung des mindestens einen Hohlwellenleiters (24; 62) ist und/oder dass der mindestens eine Datenträger (14) bezüglich einer Schreibseite/Leseseite (46) Schlitzen (48; 66) des mindestens einen Hohlwellenleiters (24; 62) zugewandt ist.

## Claims

**1.** Identification system, comprising at least one data carrier (14) having data stored or storable thereon, and at least one write/read device (12) by which data are writable to a storage device (16) of the data carrier (14) in a contactless manner and/or by which data are readable from the storage device (16) in a contactless manner, **characterized in that** the at least one write/read device (12) has arranged thereon at least one hollow waveguide (24; 62) having slots (48; 66) on a long side (30b; 64) thereof, and **in that** a distance ($L_4$) of an outer slot (86) from the nearest end face (36b) is at least approximately 25 % of a hollow waveguide wavelength ($\lambda_h$).

**2.** Identification system in accordance with claim 1, **characterized in that** the hollow waveguide (24; 62) is configured as or comprises a rigid tube (27).

**3.** Identification system in accordance with claim 1 or 2, **characterized in that** slots (48; 66) are arranged on the same long side (30b; 64) and/or in that slots (48; 66) are arranged parallel to a direction of longitudinal extent of the at least one hollow waveguide (24; 62).

**4.** Identification system in accordance with any one of the preceding claims, **characterized in that** the at least one hollow waveguide (24; 62) is closed at each of its end faces (36a; 36b) by a short circuit plate (38a; 38b).

**5.** Identification system in accordance with any one of the preceding claims, **characterized in that** the at least one hollow waveguide (24; 62) has arranged thereon at least one terminal (42) for the at least one write/read device (12), and in particular **in that** the at least one terminal (42) is located opposite the long side (30b; 64) that has slots (48; 66) arranged thereon, and in particular **in that** the at least one terminal (42) is arranged on a wide side (30a) of a rectangular hollow waveguide (24; 62), and in particular **in that** the at least one terminal (42) is arranged at or near an end face (34a) of the at least one rectangular hollow waveguide (24) and is in particular located nearer to a first end face (34a) than to a second end face (34b) opposite the first end face (34a) and has in particular a distance from the second end face (34b) that is at least three times the distance from the first end face (34a), and in particular **in that** the at least one terminal (42) is located at a distance ($L_1$) from the nearest end face (34a) that is at least approximately 25 % of a of a hollow waveguide wavelength ($\lambda_h$).

**6.** Identification system in accordance with any one of the preceding claims, **characterized in that** the at least one hollow waveguide (24; 62) has a cavity (32; 68) and **in that** slots (48; 66) between the cavity (32; 68) and the outside space are continuous and/or **in that** the at least one hollow waveguide (24; 62) has a cavity (32; 68) which has a dielectric material arranged therein.

**7.** Identification system in accordance with any one of the preceding claims, **characterized in that** the hollow waveguide (24; 62) has a rectangular cross-section.

**8.** Identification system in accordance with any one of the preceding claims, **characterized in that** the at least one hollow waveguide (24) has a first long side (28a) and a second long side (28b), wherein the second long side (28b) is spaced apart from and oriented parallel to the first long side (28a), and has a third long side (30a) and a fourth long side (30b), wherein the fourth long side (30b) is spaced apart from and oriented parallel to the third long side (30a) and the third long side (30a) is oriented perpendicularly to the first long side (28a), and in particular **in that** the first long side (28a) and the third long side (30a) have different widths ($b_1$; $b_2$) and the first long side (28a) and the second long side (28b) have the same width ($b_1$) and the third long side (30a) and the fourth long side (30b) have the same width ($b_2$).

**9.** Identification system in accordance with any one of the preceding claims, **characterized in that** the at least one data carrier (14) is positioned and/or moved externally of a cavity (32) of the at least one hollow waveguide (24) or **in that** the at least one data carrier (14) is positioned and/or moved within a cavity (68) of the at least one hollow waveguide (62), and in particular **in that** the at least one data carrier (14) is located on a holder (72) which extends through the at least one slot (66).

10. Identification system in accordance with any one of the preceding claims, **characterized in that** slots (66) are located between opposing walls (70a, 70b) which project transversely and in particular perpendicularly beyond the long side (64) which has slots (66) arranged thereon, wherein the walls (70a, 70b) point into the outside space, and in particular **in that** the opposing walls (70a, 70b) are oriented in parallel relationship, and in particular **in that** a distance of the opposing walls (70a, 70b) corresponds to the width of slots (66), and in particular in that the slots (66) and the walls (70a, 70b) are dimensioned such that the hollow waveguide (68) does not radiate outward.

11. Identification system in accordance with any one of the preceding claims, **characterized in that** slots (48; 66) are of constant width ($b_3$) along the direction of longitudinal extent thereof, and in particular **in that** slots (48; 66) are larger in length ($l_1$) in the direction of longitudinal extent thereof than they are in width ($b_3$) transverse to the direction of longitudinal extent thereof.

12. Identification system in accordance with any one of the preceding claims, **characterized in that** a distance ($L_2$) of adjacent slots (78) is at least approximately 50 % of a hollow waveguide wavelength ($\lambda_h$) and/or in that a length ($L_3$) of a slot (78) is at least approximately 50 % of a free-space wavelength ($\lambda_a$).

13. Identification system in accordance with any one of the preceding claims, **characterized by** a plurality of slots (78), wherein adjacent slots are staggered transversely relative to each other, and in particular by at least a first row (80) of slots (78) and a second row (82) of slots (78), particularly wherein the first row (80) and the second row (82) are in spaced parallel relationship to each other, and in particular in that the first row (80) and the second row (82) are each spaced from a centre line (84), and in particular in that the slots (78) in the first row (80) and the slots (78) of the second row (82) are alternately arranged.

14. Identification system in accordance with any one of the preceding claims, **characterized in that** the at least one data carrier (14) has no energy source of its own and **in that** the energy for the data exchange with the at least one write/read device (12) is provided by the at least one write/read device (12).

15. Identification system in accordance with any one of the preceding claims, **characterized in that** a moving direction (60) of a movement of the at least one data carrier (14) is transverse relative to a direction of longitudinal extent of the at least one hollow waveguide (24; 62) and/or in that the at least one data carrier (14) faces towards slots (48; 66) of the at least one hollow waveguide (24; 62) with respect to a write side/read side (46).

## Revendications

1. Système d'identification, comprenant au moins un support de données (14) sur lequel des données sont mémorisées ou mémorisables, et au moins un dispositif d'écriture et de lecture (12) au moyen duquel des données peuvent être écrites sans contact dans une mémoire (16) du support de données (14), et/ou des données peuvent être extraites sans contact de la mémoire (16), **caractérisé en ce qu'**au moins un guide d'ondes creux (24 ; 62) est disposé sur le au moins un dispositif d'écriture et de lecture (12), lequel présente des fentes (48 ; 66) sur une longueur (30b ; 64), et **en ce qu'**un espacement ($L_4$) d'une fente extérieure (86) à l'extrémité frontale (36b) la plus proche représente approximativement au moins 25 % d'une longueur d'onde ($\lambda_h$) de guide d'ondes creux.

2. Système d'identification selon la revendication 1, **caractérisé en ce que** le guide d'ondes creux (24 ; 62) est réalisé comme tube rigide (27) ou comprend un tube rigide (27).

3. Système d'identification selon la revendication 1 ou 2, **caractérisé en ce que** des fentes (48 ; 66) sont disposées sur la même longueur (30b ; 64) et/ou **en ce que** des fentes (48 ; 66) sont disposées parallèlement à une direction d'extension longitudinale du ou des guides d'ondes creux (24 ; 62).

4. Système d'identification selon l'une des revendications précédentes, **caractérisé en ce que** le au moins un guide d'ondes creux (24 ; 62) est obturé par une plaque de court-circuit (38a ; 38b) sur chacune de ses faces frontales (36a ; 36b).

5. Système d'identification selon l'une des revendications précédentes, **caractérisé en ce qu'**au moins une connexion (42) pour le au moins un dispositif d'écriture et de lecture (12) est disposée sur le au moins un guide d'ondes creux (24 ; 62), et en particulier **en ce que** la ou les connexions (42) sont opposées à la longueur (30b ; 64) où sont disposées les fentes (48 ; 66), et en particulier **en ce que** la au moins une connexion (42) est disposée sur une largeur (30a) d'un guide d'ondes creux rectangulaire (24 ; 62), et en particulier **en ce que** au moins une connexion (42) est disposée sur ou à proximité d'une extrémité frontale (34a) du au moins un guide d'ondes creux rectangulaires (24), et en particulier est plus proche d'une première extrémité frontale (34a) que d'une deuxième extrémité frontale (34b) opposée à la première extrémité frontale (34a), et en particulier **en ce que** l'espacement à la deuxième extrémité frontale (34b) est au moins le triple de l'espacement à la première extrémité frontale (34a), et en particulier **en ce que** la au moins une connexion (42) est située dans un espacement ($L_1$) à l'extrémité frontale (34a) la plus proche, lequel représente approximativement au moins 25 % d'une longueur d'onde ($\lambda_h$) de guide d'ondes creux.

6. Système d'identification selon l'une des revendications précédentes, **caractérisé en ce que** au moins un guide d'ondes creux (24 ; 62) présente une cavité (32 ; 68) et **en ce que** des fentes (48 ; 66) sont continues entre la cavité (32 ; 68) et l'extérieur, et/ou **en ce que** le au moins un guide d'ondes creux (24 ; 62) présente une cavité (32 ; 68) où est disposé un diélectrique.

7. Système d'identification selon l'une des revendications précédentes, **caractérisé en ce que** le guide d'ondes creux (24 ; 62) a une section transversale rectangulaire.

8. Système d'identification selon l'une des revendications précédentes, **caractérisé en ce que** le au moins un guide d'ondes creux (24) présente une première longueur (28a) et une deuxième longueur (28b), la deuxième longueur (28b) étant espacée de la première longueur (28a) et étant orientée parallèlement à celle-ci, et présente une troisième longueur (30a) et une quatrième longueur (30b), la quatrième longueur (30b) étant espacée de la troisième longueur (30a) et étant orientée parallèlement à celle-ci, et la troisième longueur (30a) étant perpendiculaire à la première longueur (28a), et en particulier **en ce que** la première longueur (28a) et la troisième longueur (30a) sont de largeurs ($b_1$ ; $b_2$) différentes, la première longueur (28a) et la deuxième longueur (28b) ont la même largeur ($b_1$), et la troisième longueur (30a) et la quatrième longueur (30b) ont la même largeur ($b_2$).

9. Système d'identification selon l'une des revendications précédentes, **caractérisé en ce que** le au moins un support de données (14) est disposé et/ou inséré à l'extérieur d'une cavité (32) du au moins un guide d'ondes creux (24), ou **en ce que** le au moins un support de données (14) est disposé et/ou inséré à l'intérieur d'une cavité (68) du au moins un guide d'ondes creux (62), est et en particulier **en ce que** le au moins un support de données (14) est placé sur un support (72) qui traverse la au moins une fente (66).

10. Système d'identification selon l'une des revendications précédentes, **caractérisé en ce que** des fentes (66) sont ménagées entre des parois (70a, 70b) opposées faisant saillie au-dessus de la longueur (64) et en particulier perpendiculaires à celle-ci, sur lesquelles des fentes (66) sont disposées, les parois (70a, 70b) allant vers l'extérieur, et en particulier **en ce que** les parois (70a, 70b) opposées sont orientées parallèlement l'une à l'autre, et en particulier en ce qu'un espacement des parois (70a, 70b) opposées correspond à la largeur des fentes (66), et en particulier **en ce que** les fentes (66) et les parois (70a, 70b) sont dimensionnées de telle manière que le guide d'ondes creux (68) n'irradie pas vers l'extérieur.

11. Système d'identification selon l'une des revendications précédentes, **caractérisé en ce que** les fentes (48 ; 66) ont une largeur ($b_3$) constante dans leur direction d'extension longitudinale, et en particulier **en ce que** les fentes (48 ; 66) ont dans leur direction d'extension longitudinale une longueur ($l_1$) supérieure à une largeur ($b_3$) transversale à la direction d'extension longitudinale.

12. Système d'identification selon l'une des revendications précédentes, **caractérisé en ce qu'**un espacement ($L_2$) entre fentes (78) contiguës représente approximativement au moins 50 % d'une longueur d'onde ($\lambda_h$) de guide d'ondes creux et/ou **en ce qu'**une longueur ($L_3$) d'une fente (78) représente approximativement au moins 50 % d'une longueur d'onde ($\lambda_a$) d'espace libre.

13. Système d'identification selon l'une des revendications précédentes, **caractérisé par** une pluralité de fentes (78), des fentes contiguës étant décalées transversalement l'une par rapport à l'autre, et en particulier **caractérisé par** au moins une première rangée (80) de fentes (78) et une deuxième rangée (82) de fentes (78), la première rangée (80) et la deuxième rangée (82) étant en particulier espacées parallèlement, et en particulier en ce que la première rangée (80) et la deuxième rangée (82) sont respectivement espacées d'une ligne médiane (84), et en particulier en ce que les fentes (78) de la première rangée (80) et de la deuxième rangée (82) sont disposées de manière alternée.

**14.** Système d'identification selon l'une des revendications précédentes, **caractérisé en ce que** le ou les supports de données (14) n'ont pas de source d'énergie propre, et **en ce que** l'énergie pour la communication de données avec le ou les dispositifs d'écriture et de lecture (12) est fournie par le ou les dispositifs d'écriture et de lecture (12).

**15.** Système d'identification selon l'une des revendications précédentes, **caractérisé en ce qu'**un sens (60) de déplacement du ou des supports de données (14) est transversal par rapport à une direction d'extension longitudinale du ou des guides d'ondes creux (24 ; 62) et/ou **en ce que** le ou les supports de données (14) sont opposés par une face d'écriture/face de lecture (46) à des fentes (48 ; 66) du ou des guides d'ondes creux (24 ; 62).

# FIG.1

# FIG.2

EP 2 642 424 B1

# FIG.3

# FIG.4

**FIG.5**

# FIG.6

EP 2 642 424 B1

# FIG.7

FIG.8(a)

FIG.8(b)

**EP 2 642 424 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2007035644 A2
- US 20050128024 A1
- US 20100148936 A1
- US 20090091449 A1
- DE 19637964 A1
- DE 69230697 T2
- DE 602004009462 T2
- EP 2047565 B1
- EP 11174050 A
- US 20090121839 A1
- DE 102007061707 A1
- EP 2006793 A1
- US 20060086809 A1